# EUROPÄISCHE PATENTANMELDUNG

(11) **EP 2 921 721 A1**
(43) Veröffentlichungstag der Anmeldung: **23.09.2015**
(21) Anmeldenummer: 15159569.1
(22) Anmeldetag: 18.03.2015
(51) Int. Cl.: F16B 7/04, B29C 63/04

(54) **Rollenanordnung für eine Fertigungseinrichtung mit Durchlaufbearbeitung**

(30) Priorität: 20.03.2014 AT 502032014
(71) Anmelder: "FUX" Maschinenbau u. Kunststofftechnik GmbH, 4575 Roßleithen (AT)
(72) Erfinder: Tschurtchenthaler, Herbert, 4580 Windischgarsten (AT)
(74) Vertreter: Burger, Hannes

(57) **Zusammenfassung**

Die Erfindung betrifft verstellbare Rollenanordnung (5) für eine Fertigungseinrichtung (1) mit Durchlaufbearbeitung, umfassend eine an der Fertigungseinrichtung (1) anbringbare Ständeranordnung (7) aus zwei oder mehreren Stäben (11, 13) und eine am Ende der Ständeranordnung (7) angeordnete Rolle (6) zum Führen oder Andrücken eines Werkstücks (2), wobei mittels einer Klemmvorrichtung (8) zwei aufeinanderfolgende Stäbe (11, 13) lösbar, in ihrer relativen Lage zueinander fest verbindbar sind, indem beide Stäbe (11, 13) jeweils an einer Klemmstelle (10, 12) mit einer an den Querschnitt der Stäbe (11, 13) angepassten Klemmausnehmung (14, 18) und einem an diese anschließenden Schlitz (16, 20) in der Klemmvorrichtung (8) lösbar einspannbar sind. Dabei sind die beiden Klemmstellen (10, 12) von einer gemeinsamen quer zu den Schlitzen (16, 20) verlaufenden Spanneinheit (26) durchsetzt und dadurch in einem Klemmvorgang aktivierbar.

## Beschreibung

Die Erfindung betrifft eine Rollenanordnung gemäß Oberbegriff des Anspruches 1.

Bei Fertigungseinrichtungen, in denen Werkstücke während einer Durchlaufbewegung bearbeitet werden, ist es bei einer Veränderung der Werkstückgeometrie häufig erforderlich, Rollen zur Führung des Werkstückes in unterschiedlichen Positionen anzuordnen. Die Rollen sind dazu häufig an verstellbaren Ständeranordnungen befestigt, die aus zwei oder mehreren nacheinander angeordneten Stäben gebildet ist und kann eine Position einer derartigen Rolle dadurch verändert werden, dass die relative Lage der Stäbe zueinander verändert wird.

Da an einer derartigen Fertigungseinrichtung oft eine große Anzahl von derartigen Rollenanordnungen erforderlich ist, wird für die Stäbe häufig auf kostengünstige Ausgangsmaterialien zurückgegriffen, die als Halbzeug mit konstantem Querschnitt, zum Beispiel kreiszylindrisch oder rechteckig, erhältlich sind. Um die Stäbe relativ zueinander verstellen zu können und an der gewünschten Relativposition relativ zueinander fixieren zu können, werden häufig Klemmvorrichtungen verwendet, mit der ein vorgeordneter Stab mit einem nachgeordneten Stab verbunden wird. An einer derartigen Klemmvorrichtung sind dabei an die Querschnitte der zu verbindenden Stäbe angepasste Klemmausnehmungen vorgesehen, in denen ein Stab bei gelöster Klemmung in axialer Richtung verschiebbar ist und bei Aktivierung der Klemmung fixiert wird. Bei kreiszylindrischen Stabprofilen und entsprechenden kreiszylindrischen Klemmausnehmungen ist auch eine Verdrehung eines Stabes in sich um die Stabachse möglich.

Zum Aufbau einer derartigen Ständeranordnung werden an gattungsgemäßen Fertigungseinrichtungen zumeist Klemmvorrichtungen wie sie aus DE 74 13 411 U bekannt sind, verwendet, die auch als sogenannte Kreuzklemmstücke bezeichnet werden können. Bei derartigen Klemmvorrichtungen sind an einem Grundkörper zwei Klemmausnehmungen für die zu verbindenden Stäbe ausgebildet, die jeweils mit einem Spannmittel versehen werden, wodurch jeder Stab unabhängig vom anderen Stab in der Klemmausnehmung verstellt werden und fixiert werden kann. Eine häufig verwendete Ausführungsform derartiger Klemmvorrichtungen wird dazu verwendet, an einen vertikal stehenden vorgeordneten Stab einen in horizontaler Richtung verlaufenden nachgeordneten Stab verstellbar zu befestigen. Zur Verstellung der vertikalen Position einer am Ende einer Stabanordnung angeordneten Rolle wird die mit dem vorgeordneten vertikalen Stab zusammenwirkende Klemmstelle gelöst und werden der nachgeordnete Stab sowie die weiteren die Rolle tragenden Stäbe in vertikaler Richtung verstellt und anschließend die Klemmung am vorgeordneten vertikalen Stab wieder fixiert. Analog wird für eine Verstellung der Rolle in horizontaler Richtung die dem nachgeordneten horizontalen Stab zugeordnete Klemmstelle gelöst und nach erfolgter Horizontalverstellung des die Rolle tragenden Stabes wieder aktiviert.

Als Spannmittel werden häufig Spannschrauben eingesetzt, die mit einem entsprechenden Werkzeug gelöst bzw. angezogen werden, wodurch die zugeordnete Klemmstelle deaktiviert bzw. aktiviert wird.

Da bei einer Veränderung des Querschnitts der zu bearbeitenden Werkstücke häufig eine Veränderung der Rollenposition sowohl in horizontaler als auch in vertikaler Richtung erforderlich ist, müssen bei einem derartigen Verstellvorgang jeweils zwei Klemmstellen gelöst, die entsprechende Verstellung der Stäbe vorgenommen und anschließend beide Klemmstellen wieder aktiviert werden. Für eine derartige Verstellung der Rollenposition sind somit einige Arbeitsschritte nacheinander erforderlich, und ist dadurch bei Fertigungseinrichtungen, die über eine hohe Anzahl, zum Beispiel mehr als zwanzig, derartiger Rollenanordnungen aufweisen, ein sehr hoher Zeitaufwand für das Umrüsten auf ein geändertes Werkstückprofil erforderlich. Aus diesem Grund werden derartige Fertigungseinrichtungen meist mit großen Losgrößen eingesetzt, um den Anteil der Rüstkosten gering zu halten.

Die Aufgabe der Erfindung besteht darin, den Rüstaufwand für derartige Fertigungseinrichtungen zu reduzieren.

Die Aufgabe der Erfindung wird durch eine gattungsgemäße Rollenanordnung mit den kennzeichnenden Merkmalen des Anspruches 1 gelöst.

Dadurch, dass die beiden Klemmstellen von einer gemeinsamen quer zu den Schlitzen verlaufenden Spanneinheit durchsetzt sind, können diese mit einer einzigen Betätigung der Spanneinheit sowohl gleichzeitig deaktiviert als auch gleichzeitig aktiviert werden, wodurch eine kürzere Rüstzeit erzielt wird, die auch eine Bearbeitung kleinerer Losgrößen wirtschaftlich macht.

Für Fertigungseinrichtungen, bei denen die Orientierung der Rollen zumeist gleichbleibend ist, ist es von Vorteil, wenn die Klemmstellen der Klemmvorrichtung an einem einstückigen Klemmkörper ausgebildet sind. Eine unbeabsichtigte Verstellung der Rollenorientierung ist dadurch verhindert und kann die gleichbleibende Position der Rollen dauerhaft sichergestellt werden.

Für Fertigungseinrichtungen, bei denen die Rollen aufgrund sehr unterschiedlicher Werkstückquerschnitte in verschiedene Orientierungen verstellt werden müssen ist es vorteilhaft, wenn die Klemmstellen der Klemmvorrichtung an zwei bezüglich einer durch das Spannglied gebildeten Drehachse winkelverstellbaren Klemmblöcken ausgebildet sind, die bei einem Klemmvorgang gegeneinander gespannt werden. Durch diese Möglichkeit den Winkel zwischen den Klemmblöcken und damit den Kreuzungswinkel zwischen den Stäben zu verändern wird eine zusätzlicher Freiheitsgrad für die Rollenverstellung erreicht, der trotzdem mit lediglich einer Betätigung der Spanneinheit wieder aufgehoben werden kann.

Höchste Flexibilität bezüglich der bearbeitbaren Werkstückprofile wird erzielt, wenn die Klemmblöcke stufenlos winkelverstellbar sind.

Optional kann zwischen den Klemmblöcken ein Reibungselement angeordnet sein, mit dem der gegenseitigen Verdrehung der Klemmblöcke ein erhöhter Widerstand entgegengesetzt wird. Dies kann den Einstellvorgang bei gelöster Klemmung betreffen und/oder bei aktivierter Klemmvorrichtung eine erhöhte Sicherheit gegen ungewollte Winkeländerungen im Betrieb bewirken.

Weiters können die Klemmblöcke eine formschlüssige Verdrehsicherung mit Einrastfunktion aufweisen, durch die vor dem Klemmvorgang diskrete Verdrehwinkel eingestellt werden können. Auf diese Weise können vorbestimmte, gängige Kreuzungswinkel z.B. 90°, 75°, 60° schnell und mit hoher Genauigkeit eingestellt werden, ohne dass ein Nachmessen der Winkel erforderlich ist. Darüber hinaus ist sichergestellt, dass im Betrieb keine ungewollte Winkeländerung auftritt.

Eine gleichmäßigere Spannkraft am Stabumfang kann erzielt werden, wenn sich an einer Klemmstelle der Schlitz an der der Spanneinheit gegenüberliegenden Seite über die Klemmausnehmung hinaus erstreckt.

Eine vorteilhafte Ausführungsform der Rollenanordnung besteht darin, dass die Klemmblöcke einen quaderförmigen oder polygonförmigen Grundkörper mit darin eingebrachter Klemmausnehmung, Schlitz und Bohrung für die Spanneinheit aufweisen. Durch diese Form sind sie in Bearbeitungmaschinen einfach aufzuspannen, leicht herzustellen und sehr stabil. Eine Ausführung mit zylindrischem Grundkörper der Klemmblöcke kann aufgrund der leicht verfügbaren Ausgangsmaterialien ebenfalls von Vorteil sein und zeichnet sich durch eine schlanke Bauform aus und ist durch die großen Abrundungen für eine Bedienperson angenehm zu handhaben. Die zylindrischen Grundkörper werden im Bereich ihrer gegenseitigen Kontaktstellen abgeflacht, damit eine gleichmäßige Übertragung der Klemmkräfte erfolgen kann.

Eine weitere Verkürzung der Rüstzeiten kann erzielt werden, indem die Spanneinheit ein werkzeuglos bedienbares Befestigungselement ausgewählt aus einer Gruppe umfassend Knebelschraube, Knebelmutter, Flügelschraube, Flügelmutter, Exzenterspanner, Kniehebelspanner, umfasst. Dadurch entfällt das häufige Ansetzen eines Werkzeuges.

Wenn die Spanneinheit ein im Klemmblock oder Klemmkörper ausgebildetes Innengewinde oder eine in diesen eingesetzte Spannmutter umfasst ergibt sich eine kleinere Außenkontur der Ständeranordnung und erlaubt dies eine engere Anordnung benachbarter Rollenanordnungen.

Eine weitere mögliche Ausführung eines Klemmblocks besteht darin, dass dieser aus zwei gelenkig miteinander verbundenen Klemmbacken gebildet ist, die jeweils etwa die Hälfte der Klemmausnehmung aufweisen. Derartige aufklappbare Klemmblöcke können ohne größeren Aufwand an bestehenden Rollenanordnungen zur Anbringung weiterer Stäbe hinzugefügt bzw. entfernt werden.

Die Klemmkörper, die Klemmblöcke oder die Klemmbacken der vorgenannten Ausführungsformen können alternativ zur Herstellung aus Vollmaterial auch mittels eines Druckgussverfahrens hergestellt werden, wodurch sie im Wesentlichen als Druckgussteile aus einem Druckgussmaterial ausgebildet sind und sich für größere Stückzahlen niedrigere Herstellkosten ergeben.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungseinrichtung mit Durchlaufbearbeitung und mehreren verstellbaren Rollenanordnungen;
- Fig. 2: eine zur Erstellung von Rollenanordnungen verwendete Klemmvorrichtung gemäß dem Stand der Technik;
- Fig. 3: eine Ansicht einer erfindungsgemäßen Rollenanordnung;
- Fig. 4: eine Ansicht der Rollenanordnung gemäß Fig. 3 betrachtet in Richtung IV;
- Fig. 5: eine Klemmvorrichtung zur Bildung einer weiteren Ausführungsform einer Rollenanordnung;
- Fig. 6: eine Ansicht der Klemmvorrichtung gemäß Fig. 5 in Richtung VI;
- Fig. 7: eine Ansicht einer weiteren Ausführungsform eines Klemmblocks mit verlängertem Schlitz;
- Fig. 8: eine Ansicht einer weiteren Ausführungsform eines Klemmblocks mit gelenkig verbundenen Klemmbacken.

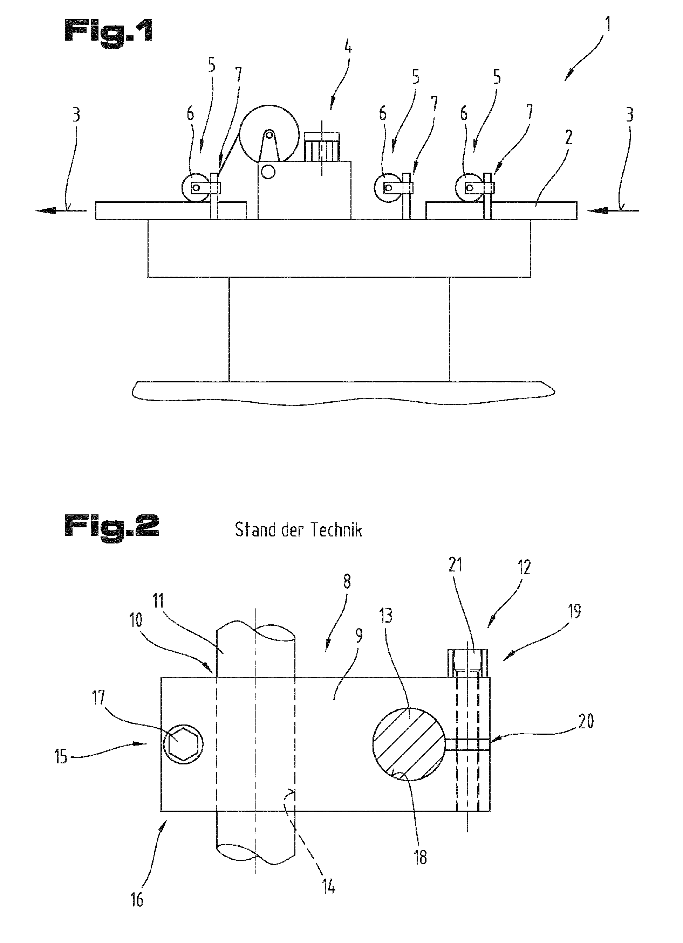

Fig. 1 zeigt eine Ansicht einer Fertigungseinrichtung 1 für eine Durchlaufbearbeitung von Werkstücken 2.

An dieser Fertigungseinrichtung 1 werden beispielsweise Werkstücke 2 in Transportrichtung 3 durch die Fertigungseimichtung 1 geführt und werden an einer Bearbeitungsstation 4 Arbeitsschritte an den Werkstücken 2 ausgeführt. An der Fertigungseinrichtung 1 sind mehrere Rollenanordnungen 5 angebracht, mit denen die Werkstücke 2 während des Durchlaufes geführt oder auch bearbeitet werden können. Die Rollenanordnungen 5 sind dabei mit Rollen 6 versehen, die unterschiedliche Aufgaben ausführen können. In Fig. 1 sind die in Transportrichtung 3 gesehen ersten beiden Rollen 6 zur Führung der Werkstücke 2 vorgesehen, während beispielsweise die in Transportrichtung 3 nach der Bearbeitungsstation 4 angeordnete Rolle 6 zum Andrücken eines folienartigen Beschichtungsmaterials vorgesehen ist. Weitere Anwendungen derartiger Rollen können beispielsweise das Anbringen einer Stempelmarkierung oder das Messen von Werkstücklängen sein, wobei die Anwendung nicht auf die erwähnten Beispiele beschränkt ist.

Sind an einer derartigen Fertigungseinrichtung Werkstücke 2 mit einem anderen Profilquerschnitt zu bearbeiten, ist es erforderlich, die Position der Rollen 6 an die geänderte Werkstückgeometrie anzupassen. Dazu sind die Rollen 6 an Ständeranordnungen 7 befestigt, die aus zwei oder mehreren aneinander gefügten und relativ zueinander verstellbaren Stäben zusammengesetzt sind. Eine Rollenanordnung 5 gemäß Ausführungsbeispiel in Fig. 1 umfasst dabei einen am Gestell der Fertigungseinrichtung 1 angebrachten vertikalen Stab und einen horizontalen zweiten Stab, der an seinem Ende eine Rolle 6 trägt. Zur Befestigung der Rolle können dabei zwischen dem letzten Stab und der Rolle noch Zwischenstücke zur Herstellung eines erforderlichen Abstands oder ein zusätzliches Gelenkteil oder andere nicht unbedingt stabförmige Bauteile vorgesehen sein und ist beim Anmeldegegenstand unter Stäben, die die Ständeranordnung aufbauen, nicht unbedingt ein Bauteil zu verstehen, der deutlich länger ist, als seine Querschnittsabmessungen, sondern können durchaus auch kurze oder flächige Bauteile Bestandteil der Ständeranordnung sein. Um die Position der Rolle 6 verstellen zu können, ist als Verbindung zwischen den Stäben eine Klemmvorrichtung angeordnet, mit der die relative Lage der Stäbe zueinander verstellt aber auch fixiert werden kann.

Fig. 2 zeigt eine aus dem Stand der Technik bekannte Klemmvorrichtung 8, wie sie bei den aus dem Stand der Technik bekannten Rollenanordnungen zur Bildung der Ständeranordnung 7 verwendet wird. Die Klemmvorrichtung 8 umfasst dabei einen Klemmkörper 9, an dem eine erste Klemmstelle 10 zur Klemmung eines ersten Stabes 11 und eine zweite Klemmstelle 12 zur Klemmung eines zweiten Stabes 13 ausgebildet sind. Die erste Klemmstelle 10 ist durch eine dem Querschnitt des Stabes 11 angepasste Klemmausnehmung 14 und eine dieser zugeordnete Spanneinheit 15 gebildet, mit der der lichte Querschnitt der Klemmausnehmung 14 bezogen auf den Stab 11 zwischen einer Spielpassung und einer Presspassung verstellt werden kann.

Bei deaktivierter Spanneinheit 15 ist der Stab 11 durch die vorliegende Spielpassung in axialer Richtung in der Klemmausnehmung 14 verschiebblich, während der Stab 11 bei aktivierter Spanneinheit 15 durch die vorliegende Presspassung sowohl gegen axiale Verschiebung als auch Rotation um die eigene Längsachse fixiert ist. Damit der lichte Querschnitt der Klemmausnehmung 14 verstellt werden kann, schließt an diese ein Schlitz 16 an, und wird dieser Schlitz von der Spanneinheit 15 verkleinert bzw. vergrößert, wodurch die an den Schlitz 16 anschließenden Abschnitte der Klemmausnehmung 14 bedarfsweise, wie zwei Klemmbacken, auf den Stab 11 einwirken. Die Spanneinheit 15 ist, wie in Fig. 2 dargestellt, im einfachsten Fall durch eine Spannschraube 17 gebildet, die die Klemmstelle 10 im Bereich des Schlitzes 16 durchsetzt und diesen verengen kann, wodurch der lichte Querschnitt der Klemmausnehmung 14 verringert und der Stab 11 fixiert wird.

Die zweite Klemmstelle 12 ist analog zur ersten Klemmstelle 10 aus einer Klemmausnehmung 18, und einer Spanneinheit 19 zusammengesetzt, die auf einen von der Klemmausnehmung 18 ausgehenden Schlitz 20 einwirkt. Da die beiden Klemmstellen 10 und 12 unabhängig voneinander sind, ist für eine Verstellung beider Stäbe 11 und 13 das Lösen beider Klemmstellen 10 und 12, das Verstellen der Stäbe 11 und 13 und das abschließende Aktivieren der Klemmstellen 10 und 12 erforderlich, wodurch ein derartiger Verstellvorgang vergleichsweise viel Zeit beansprucht.

Eine Klemmvorrichtung gemäß Fig. 2 entspricht somit dem in der Einleitung angeführten Stand der Technik und ist mit den dort beschriebenen Nachteilen behaftet.

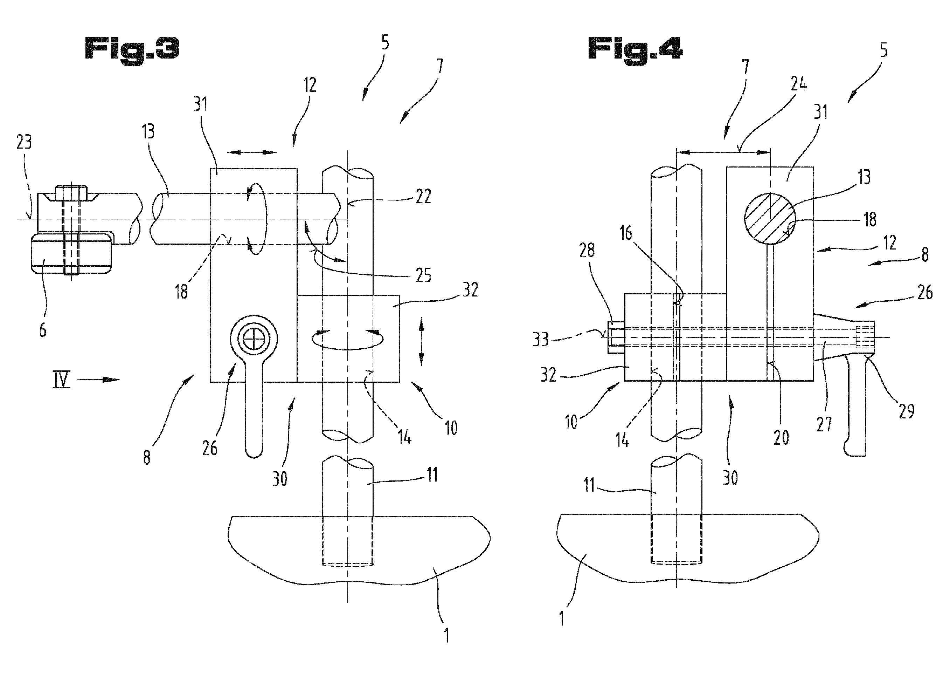

In den Fig. 3 und 4 sind zwei Ansichten einer erfindungsgemäßen Rollenanordnung 5 gezeigt, bei der eine Rolle 6 von einer verstellbaren Ständeranordnung 7 in einer bestimmten Position gehalten wird. Die Ständeranordnung umfasst dabei einen ersten Stab 11, der mit dem Gestell der Fertigungseinrichtung 1 verbunden ist und einen nachgeordneten zweiten Stab 13, an dessen Ende die Rolle 6 befestigt ist. Die Stäbe 11 und 13 sind mittels einer Klemmvorrichtung 8 verbunden und kann bei Deaktivierung der Klemmvorrichtung 8 die relative Lage der Stäbe 11, 13 zueinander verstellt und in der eingestellten Position fixiert werden.

Im dargestellten Ausführungsbeispiel besitzen die Stäbe 11, 13 einen kreisrunden Querschnitt und können aus Vollmaterial oder auch aus Rohren gebildet sein, und ist durch die rotationssymmetrische Außenkontur eine Verstellung nicht nur in axialer Richtung der Stäbe 11, 13 möglich, sondern auch eine Rotation um die jeweils eigene Längsachse.

Im Ausführungsbeispiel gemäß Fig. 3 und 4 kann die Klemmvorrichtung 8 nach Deaktivierung der Spanneinheit zusammen mit dem nachgeordneten Stab 13 sowie der am Ende der Ständeranordnung 7 befestigten Rolle 6 in vertikaler Richtung verstellt werden und kann zusätzlich eine Verdrehung um die Längsachse 22 des Stabes 11 erfolgen. Zusätzlich kann bei deaktivierter Klemmung der nachgeordnete Stab 13 in seiner axialen Längsrichtung verschoben sowie um seine eigene Längsachse 23 verdreht werden, wodurch auch die Position und Lage der Rolle 6 dementsprechend geändert werden kann. Die Klemmausnehmungen 14 und 18 sind in ihrem lichten Querschnitt dem Querschnitt der Stäbe 11, 13 angepasst und daher im dargestellten Ausführungsbeispiel kreisförmig.

Abweichend davon können auch Stäbe 11, 13 verwendet werden, die keinen kreisrunden Querschnitt aufweisen, sondern sind auch alle sonstigen Profilquerschnitte denkbar, wie zum Beispiel ovale, eckige Profilquerschnitte, insbesondere quadratische, sechseckige oder achteckige Querschnittsformen, wodurch eine Verdrehung eines Stabes um seine eigene Längsachse nicht innerhalb der Klemmausnehmung 14, 18 möglich ist.

Die Längsachsen 22 und 23 der Stäbe 11, 13 besitzen, wie in Fig. 4 dargestellt, zueinander einen Normalabstand 24, der zumindest der Summe der halben Stabdurchmesser entspricht wodurch sich die Stäbe 11, 13 kreuzen können, wobei, wie in Fig. 3 erkennbar ist, der Kreuzungswinkel 25 von der Orientierung der Klemmausnehmungen 14 und 18 bestimmt wird. In Fig. 3 ist ein Kreuzungswinkel 25 von 90° gegeben, wodurch der mit dem vorgeordneten vertikalen Stab 11 verbundene nachgeordnete Stab 13 in horizontaler Richtung verläuft. Abweichend zu der in Fig. 2 dargestellten Klemmvorrichtung 8 mit zwei voneinander unabhängigen Klemmstellen 10 und 12, denen jeweils eine eigene Spanneinheit 15 bzw. 19 zugeordnet ist, weist eine erfindungsgemäße Klemmvorrichtung 8 lediglich eine gemeinsame Spanneinheit 26 auf, die die Klemmstellen 10 und 12 quer zu den Schlitzen 16 und 20 durchsetzt, wodurch von der Spanneinheit 26 das Lösen bzw. Klemmen beider Klemmstellen 10, 12 gleichzeitig erfolgt.

Die Spanneinheit 26 umfasst im dargestellten Ausführungsbeispiel eine Spannschraube 27 , z.B. in Form einer Sechskantschraube und eine Spannmutter 28 z.B. eine Sechskantmutter, die an gegenüberliegenden Außenseiten der Klemmstellen 10 und 12 angreifen und beim Anspannen der Spannschraube 27 die Weite der Schlitze 16 und 20 reduzieren, wodurch der Klemmvorgang aktiviert wird. Zur vereinfachten und insbesondere werkzeuglosen Bedienung der Klemmvorrichtung 8 kann die Spannschraube 27 als Knebelschraube 29 oder als Flügelschraube ausgebildet sein. Analog kann die Spannmutter 28 als Knebelmutter oder Flügelmutter ausgeführt sein. Anstatt einer Spannschraube 27 kann die Spanneinheit 26 auch als Exzenterspanner oder Kniehebelspanner ausgeführt sein, wodurch ein Klemmvorgang auch ohne drehende Bewegung möglich ist.

Der Vorteil der Ausbildung der Ständeranordnung 7 mit einer derartigen Klemmvorrichtung 8 besteht darin, dass mit einer einfachen Betätigung der gemeinsamen Spanneinheit 26 gleichzeitig mehrere Freiheitsgrade der Rollenanordnung 5 freigegeben werden und eine gewünschte Verstellung der Rolle 6 in sehr kurzer Zeit erfolgen kann. Sinngemäß erfolgt auch durch eine weitere einfache Betätigung der gemeinsamen Spanneinheit 26 die gleichzeitige Aktivierung der Klemmstellen 10 und 12 und die sofortige Aufhebung der bei der Rollenverstellung gegebenen Freiheitsgrade.

In der Praxis kann bei einer derartigen Rollenanordnung 5 eine Hand der Bedienperson zur Betätigung der gemeinsamen Spanneinheit 26 an der Klemmvorrichtung 8 verbleiben, während mit der zweiten Hand die Rolle 6 im Rahmen der vorhandenen Freiheitsgrade positioniert werden kann.

Das Umrüsten einer Fertigungseinrichtung mit einer großen Anzahl von Rollenanordnungen 5 kann dementsprechend in viel kürzerer Zeit erfolgen, als bei Verwendung von Klemmvorrichtungen in der Ausführung gemäß Fig. 2.

Die Klemmstellen 10 und 12 können an einem einstückigen Klemmkörper 30 ausgebildet sein, wodurch die gegenseitige relative Lage der Klemmstellen 10 und 12 und damit auch der Kreuzungswinkel 25 unveränderlich ist, alternativ ist es jedoch auch möglich, dass die beiden Klemmstellen 10 und 12 an separaten Klemmblöcke 31 und 32 ausgebildet sind, die im Bereich der Schlitze 16 und 20 von der gemeinsamen Spanneinheit 26 durchsetzt werden und diese eine Drehachse 33 für eine gegenseitige Winkelverstellung der Klemmblöcke 31 und 32 bildet. In diesem Fall ist bei gelöster Klemmung, also bei deaktivierter Spanneinheit 26, eine Veränderung des Kreuzungswinkels 25 (siehe Fig. 3) möglich und wird diese Winkelverstellbarkeit bei Aktivierung der Klemmung durch die Spanneinheit 26 aufgehoben, indem zusätzlich zu den auf die Stäbe 11 und 13 einwirkenden Klemmstellen 10 und 12 auch die beiden Klemmblöcke 31 und 32 gegeneinander verspannt werden, wodurch deren gegenseitige Winkelposition fixiert wird.

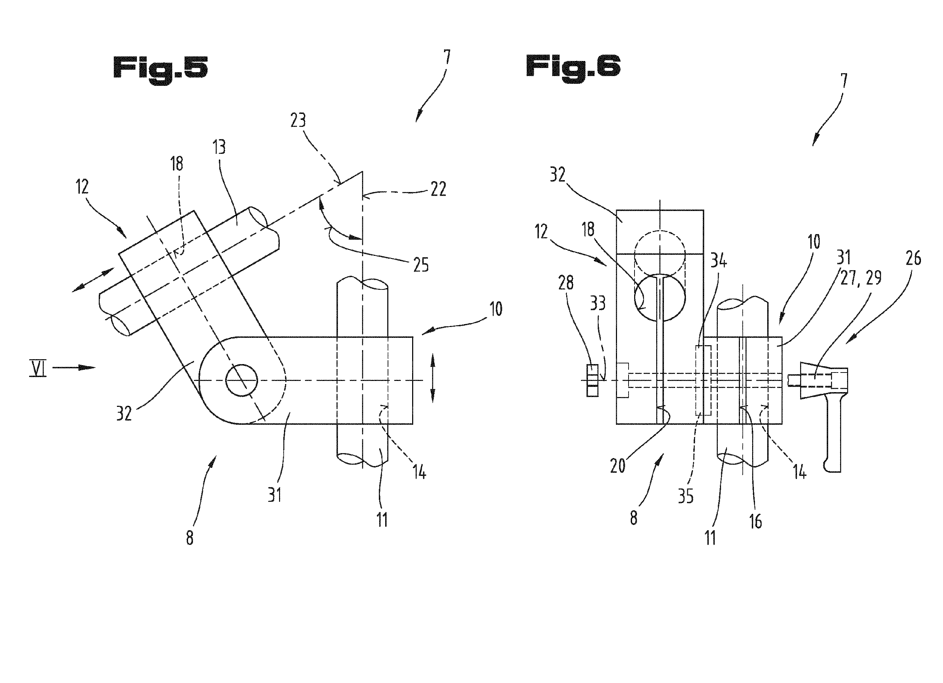

In den Fig. 5 und 6 sind zwei Teilansichten einer Ständeranordnung 7 für eine weitere Ausführungsform einer Rollenanordnung 5 dargestellt, wobei aus Gründen der Übersichtlichkeit in Fig. 6 nur der vorgeordnete Stab 11 dargestellt ist und in Fig. 5 auf die Darstellung der Spanneinheit 26 verzichtet wurde.

Bei dieser Ausführungsform umfasst die Klemmvorrichtung 8 zwei Klemmblöcke 31, 32, die über die gemeinsame Spanneinheit 26 miteinander verbunden sind (siehe Fig. 6) und bei denen eine Verstellung des Kreuzungswinkels 25 zwischen den Längsachsen 22 und 23 der Stäbe 11 bzw. 13 möglich ist. Im Klemmkörper 31 ist, wie bereits anhand von Figuren 3 und 4 beschrieben, eine erste Klemmstelle 10 durch die Klemmausnehmung 14 und den daran anschließenden Schlitz 16 gebildet, ebenso wie im zweiten Klemmblock 32 durch die Klemmausnehmung 18 und den an diese anschließenden Schlitz 20 die zweite Klemmstelle 12 gebildet ist.

Durch die Verwendung einer derartigen Klemmvorrichtung 8 erhält man für die Verstellung der Rolle 6 einen zusätzlichen Freiheitsgrad durch den veränderlichen Kreuzungswinkel 25, wodurch eine sehr flexible und dennoch rasche Verstellung der Rolle an der Fertigungseinrichtung 1 erfolgen kann. Die Verstellung kann bei entsprechender Ausbildung der Kontaktflächen zwischen den Klemmblöcken 31 und 32 stufenlos erfolgen.

Zusätzlich kann durch diese Winkelverstellmöglichkeit eine Rolle 6 mit dem Stab 13 aus der Fertigungseinrichtung 1 heraus ausgeschwenkt werden, beispielsweise um einen Rollenwechsel durchzuführen, wogegen bei der Verwendung einer herkömmlichen Klemmvorrichtung gemäß Fig. 2 nur ein Ausschwenken um die Hochachse des vertikalen Stabes möglich ist, was bei knapp hintereinander positionierten Rollenanordnungen aufgrund des fehlenden Freiraums oft nicht möglich ist.

In Fig. 6 ist weiters dargestellt, dass zwischen den beiden Klemmblöcken 31 und 32 ein optionales Reibungselement 34 angeordnet sein kann, mit dem die Winkelverstellbarkeit zwischen den beiden Klemmblöcken 31 und 32 beeinflusst wird. Diese Beeinflussung kann sowohl den nicht geklemmten Zustand der Klemmvorrichtung 8 betreffen, um beim Einstellen der Rollenanordnung 5 eine zu hohe Beweglichkeit zu reduzieren oder kann alternativ oder zusätzlich eine ungewollte Verdrehung der Klemmblöcke 31 und 32 im geklemmten Zustand aufgrund erhöhter Reibung gehemmt werden, um die eingestellte Position der Rolle 6 dauerhaft sicherzustellen.

Weiters kann zwischen den Klemmblöcken 31 und 32 eine formschlüssig wirkende Verdrehsicherung 35 vorgesehen sein, mit deren Hilfe diskrete Verdrehwinkel zwischen den Klemmblöcken 31 und 32 eingestellt werden können. Dadurch können die von der Klemmvorrichtung 8 geklemmten Stäbe 11, 13 schnell und mit hoher Genauigkeit auf bestimmte Kreuzungswinkel 25 eingestellt werden. Eine derartige Verdrehsicherung kann beispielsweise auf einer Plan-Kerbverzahnung basieren oder Raststifte an einem Klemmblock verwenden, die in unterschiedlichen Winkelpositionen in entsprechende Rastvertiefungen im anderen Klemmblock eingreifen können.

Fig. 6 zeigt, dass die Spannmutter 28 auch in einer Ausnehmung im Klemmblock 32 eingesetzt sein kann, wodurch eine kleinere Außenkontur der Klemmvorrichtung 8 erzielt wird. Alternativ kann anstatt der Spannmutter 28 im Klemmblock 32 ein Innengewinde für die Spannschraube 27 ausgebildet sein.

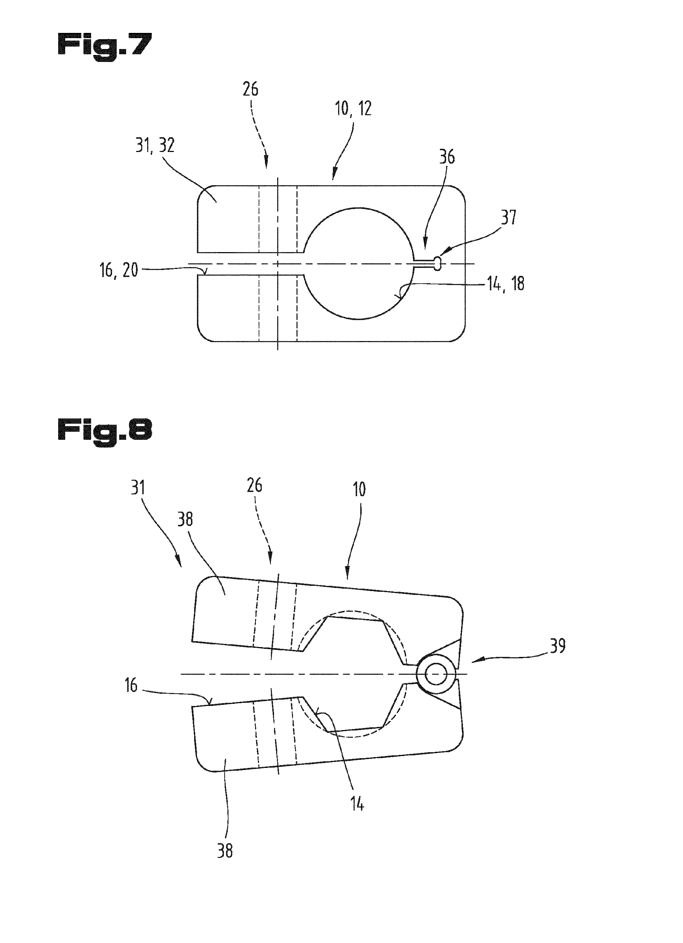

In Fig. 7 ist ein Beispiel für eine weitere mögliche Ausführungsform eines Klemmkörpers 31 bzw. 32 dargestellt, der einen quaderförmigen Grundkörper aufweist, in den die Klemmausnehmung 14 bzw. 18 sowie der daran anschließende Schlitz 16 bzw. 20 eingebracht sind, wodurch die Klemmstelle 10 bzw. 12 gebildet ist. Der quaderförmige Grundkörper lässt sich bei seiner Herstellung sehr gut in Werkzeugmaschinen einspannen und stellt dies daher eine sehr kostengünstige Ausführungsform dar.

Bei allen beschriebenen Ausführungsformen der Rollenanordnung 5 kann, wie in Fig. 7 dargestellt, sich der Schlitz 16 an der der Spanneinheit 26 gegenüberliegenden Seite der Klemmausnehmung 14 über diese hinaus erstrecken. Durch eine derartige Schlitzverlängerung 36 ergeben sich in der Klemmausnehmung 14 einfach zu berechnende Kraftverhältnisse und kann die auf den Stab einwirkende Spannkraft gleichmäßiger verteilt werden. Zusätzlich kann diese Schlitzverlängerung 36 mit einer Ausrundung 37 versehen sein, wodurch die mechanische Kerbwirkung der Schlitzverlängerung 36 herabgesetzt wird.

Fig. 8 zeigt eine weitere mögliche Ausführungsform eines Klemmblocks 31 einer erfindungsgemäßen Klemmvorrichtung 8, bei der der Klemmblock 31 aus zwei Klemmbacken 38 besteht, die durch ein an der Spanneinheit 26 gegenüberliegenden Seite der Klemmausnehmung 14 angeordnetes Gelenk 39 gelenkig miteinander verbunden sind. Ein derartiger Klemmblock 31 kann ohne Ausfädeln bzw. Auffädeln an eine bestehende Ständeranordnung 7 hinzugefügt bzw. entfernt werden, wenn sich die beiden Klemmbacken 38 weiter öffnen lassen als der Außendurchmesser der verwendeten Stäbe.

In Fig. 8 ist weiters dargestellt, dass die Klemmausnehmung 14 anstatt der strichliert angedeuteten runden Form eine eckige, polygonale Form aufweisen kann, zum Beispiel eine sechseckige Form, und ist für derartige Stäbe die Verwendung eines Klemmblocks 31 mit zwei gelenkig verbundenen Klemmbacken 38 von Vorteil, wenn bezüglich der Längsachse des Stabes eine Verdrehung der Klemmvorrichtung 8 erfolgen sollte. Eine eckige oder polygonale Form der Klemmausnehmung ist auch bei den zuvor beschrieben Ausführungsformen möglich.

Klemmkörper 30, die Klemmblöcke 31, 32 oder die Klemmbacken 38 der vorhergehenden Ausführungsbeispiele können alternativ zur Herstellung aus Vollmaterial auch mittels eines Druckgussverfahrens hergestellt werden, wodurch sie im Wesentlichen als Druckgussteile aus einem Druckgussmaterial, z.B. auf Basis von Aluminium, Zink, Gusseisen, Bronze, Messing usw., ausgebildet sind und sich für größere Stückzahlen niedrigere Kosten einer derartigen Rollenanordnung ergeben.

Die Ausführungsbeispiele zeigen mögliche Ausführungsvarianten der Rollenanordnung 5, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei darauf hingewiesen, dass zum besseren Verständnis des Aufbaus der Rollenanordnung 5 diese bzw. deren Bestandteile teilweise unmaßstäblich und/oder vergrößert und/oder verkleinert dargestellt wurden.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 3, 4; 5, 6; 7; 8 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

### Bezugszeichenaufstellung

| | | | |
|---|---|---|---|
| 1 | Fertigungseinrichtung | 31 | Klemmblock |
| 2 | Werkstück | 32 | Klemmblock |
| 3 | Transportrichtung | 33 | Drehachse |
| 4 | Bearbeitungsstation | 34 | Reibungselement |
| 5 | Rollenanordnung | 35 | Verdrehsicherung |
| 6 | Rolle | 36 | Schlitzverlängerung |
| 7 | Ständeranordnung | 37 | Ausrundung |
| 8 | Klemmvorrichtung | 38 | Klemmbacken |
| 9 | Klemmkörper | 39 | Gelenk |
| 10 | erste Klemmstelle | | |
| 11 | Stab | | |
| 12 | zweite Klemmstelle | | |
| 13 | Stab | | |
| 14 | Klemmausnehmung | | |
| 15 | Spanneinheit | | |
| 16 | Schlitz | | |
| 17 | Spannschraube | | |
| 18 | Klemmausnehmung | | |
| 19 | Spanneinheit | | |
| 20 | Schlitz | | |
| 21 | Spannschraube | | |
| 22 | Längsachse | | |
| 23 | Längsachse | | |
| 24 | Normalabstand | | |
| 25 | Kreuzungswinkel | | |
| 26 | Spanneinheit | | |
| 27 | Spannschraube | | |
| 28 | Spannmutter | | |
| 29 | Knebelschraube | | |
| 30 | Klemmkörper | | |

## Patentansprüche

1. Verstellbare Rollenanordnung (5) für eine Fertigungseinrichtung (1) mit Durchlaufbearbeitung, umfassend eine an der Fertigungseinrichtung (1) anbringbare Ständeranordnung (7) aus zwei oder mehreren Stäben (11, 13) und eine am Ende der Ständeranordnung (7) angeordnete Rolle (6) zum Führen oder Andrücken eines Werkstücks (2), wobei mittels einer Klemmvorrichtung (8) zwei aufeinanderfolgende Stäbe (11, 13) lösbar, in ihrer relativen Lage zueinander fest verbindbar sind, indem beide Stäbe (11, 13) jeweils an einer Klemmstelle (10, 12) mit einer an den Querschnitt der Stäbe (11, 13) angepassten Klemmausnehmung (14, 18) und einem an diese anschließenden Schlitz (16, 20) in der Klemmvorrichtung (8) lösbar einspannbar sind, **dadurch gekennzeichnet, dass** die beiden Klemmstellen (10, 12) von einer gemeinsamen quer zu den Schlitzen (16, 20) verlaufenden Spanneinheit (26) durchsetzt sind und dadurch in einem Klemmvorgang aktivierbar sind.

2. Rollenanordnung (5) nach Anspruch 1, **dadurch gekennzeichnet, dass** die Klemmstellen (10, 12) der Klemmvorrichtung (8) an einem einstückigen Klemmkörper (30) ausgebildet sind.

3. Rollenanordnung (5) nach Anspruch 1, **dadurch gekennzeichnet, dass** die Klemmstellen (10, 12) der Klemmvorrichtung (8) an zwei bezüglich einer durch die Spanneinheit (26) gebildeten Drehachse (33) winkelverstellbaren Klemmblöcken (31, 32) ausgebildet sind, die bei einem Klemmvorgang gegeneinander gespannt werden.

4. Rollenanordnung (5) nach Anspruch 3, **dadurch gekennzeichnet, dass** die Klemmblöcke (31, 32) stufenlos winkelverstellbar sind.

5. Rollenanordnung (5) nach Anspruch 3 oder 4, **dadurch gekennzeichnet, dass** zwischen den Klemmblöcken (31, 32) ein Reibungselement (34) angeordnet ist.

6. Rollenanordnung (5) nach Anspruch 3 oder 5, **dadurch gekennzeichnet, dass** die Klemmblöcke eine formschlüssige Verdrehsicherung (35) aufweisen, durch die vor dem Klemmvorgang diskrete Verdrehwinkel eingestellt werden können.

7. Rollenanordnung (5) nach einem der Ansprüche 1 bis 6, **dadurch gekennzeichnet, dass** sich an einer Klemmstelle (10, 12) der Schlitz (16, 20) an der der Spanneinheit (26) gegenüberliegenden Seite in Form einer Schlitzverlängerung (36) über die Klemmausnehmung (14, 18) hinaus erstreckt.

8. Rollenanordnung (5) nach einem der vorhergehenden Ansprüche, **dadurch gekennzeichnet, dass** die Klemmblöcke (31, 32) einen quaderförmigen, polygonförmigen oder zylindrischen Grundkörper mit darin eingebrachter Klemmausnehmung (14, 18) für den Stab (11, 13), Schlitz (16, 20) und Bohrungen für die Spanneinheit (26) aufweisen.

9. Rollenanordnung (5) nach einem der vorhergehenden Ansprüche, **dadurch gekennzeichnet, dass** die Spanneinheit (26) ein werkzeuglos bedienbares Befestigungselement ausgewählt aus einer Gruppe umfassend Knebelschraube (29), Knebelmutter, Flügelschraube, Flügelmutter, Exzenterspanner, Kniehebelspanner, umfasst.

10. Rollenanordnung (5) nach einem der vorhergehenden Ansprüche, **dadurch gekennzeichnet, dass** die Spanneinheit (26) ein im Klemmblock (31, 32) oder Klemmkörper (30) ausgebildetes Innengewinde oder eine in diesen eingesetzte Spannmutter (28) umfasst.

11. Rollenanordnung (5) nach einem der vorhergehenden Ansprüche, **dadurch gekennzeichnet, dass** der Klemmblock (31, 32) zwei mittels eines Gelenks (39) verbundene Klemmbacken (38) umfasst

12. Rollenanordnung (5) nach einem der vorhergehenden Ansprüche, **dadurch gekennzeichnet, dass** der Klemmkörper (30), die Klemmblöcke (31, 32) oder die Klemmbacken (38) im Wesentlichen als Druckgussteile ausgebildet und aus einem Druckgussmaterial aufgebaut sind.
